# EUROPÄISCHE PATENTSCHRIFT

(11) **EP 1 473 800 B1**
(45) Veröffentlichungstag und Bekanntmachung des Hinweises auf die Patenterteilung: **20.12.2006**
(21) Anmeldenummer: 04090107.6
(22) Anmeldetag: 15.03.2004
(51) Int. Cl.: H01R 4/60

(54) **Flexible elektrische Leiterverbindung**
Flexible electrical conductor connection
Connexion électrique flexible pour des conducteurs

(30) Priorität: 11.04.2003 DE 10317734
(43) Veröffentlichungstag der Anmeldung: 03.11.2004
(73) Patentinhaber: SIEMENS AKTIENGESELLSCHAFT, 80333 München (DE)
(72) Erfinder: Meinherz, Manfred, 13467 Berlin (DE)

(56) Entgegenhaltungen:
- US-A- 4 582 373
- US-A- 4 627 677

## Beschreibung

Die Erfindung bezieht sich auf eine flexible elektrische Leiterverbindung zwischen einem ersten elektrischen Leiter und einem zweiten elektrischen Leiter, wobei die Leiterverbindung einen reversibel verformbaren Abschnitt mit einem filmelastischen Element und einem eine Bewegbarkeit des reversibel verformbaren Abschnittes begrenzendes Führungselement aufweist.

Zur Verbindung zweier elektrischer Leiter die zur Führung eines elektrischen Stromes dienen, ist es beispielsweise bekannt, flexible Leiterseile einzusetzen. Zur Kontaktierung der Leiterseile sind diese an ihren Enden mit entsprechenden Kabelschuhen zu versehen oder in einer anderen geeigneten Weise mit den elektrischen Leitern zu verbinden. Das ist montageunfreundlich. Des Weiteren weisen die Leiterseile je nach ihrer Einbaueinlage einen bestimmten Durchhang auf. Dieser Durchhang kann zu einer Beeinflussung der Isolierung der elektrischen Leiter führen.

Aus dem US-Patent US 4,627,677 ist ein flexibles Stromtragelement bekannt, welches an einem Ende eines säulenförmigen Grundkörpers einen Faltenbalg aufweist, welcher den säulenförmigen Grundkörper mit einer Scheibe elektrisch leitend verbindet. Dadurch ist eine Bewegbarkeit zwischen dem säulenförmigen Grundkörper und der Scheibe gegeben.

Weiterhin ist aus dem US-Patent US 4,582,378 ein Anschlusselement bekannt, welches der Kontaktierung einer rohrförmigen Sammelschiene dient. Ein Führungselement greift in ein Ende der rohrförmigen Sammelschiene ein. Zur elektrischen Kontaktierung sind mehrere elastisch verformbare bogenförmig gelegte Leiterverbindungen vorgesehen. Die Leiterverbindungen sind frei zugänglich.

Der vorliegenden Erfindung liegt die Aufgabe zugrunde, eine flexible elektrische Leiterverbindung der eingangs genannten Art so auszubilden, dass die Leiterverbindung gegenüber äußeren Kräften besser geschützt ist.

Die Aufgabe wird bei einer flexiblen elektrischen Leiterverbindung der eingangs genannten Art erfindungsgemäß dadurch gelöst, dass das Führungselement den reversibel verformbaren Abschnitt umgibt.

Filmelastische Elemente sind mit einer hinreichenden mechanischen Fertigkeit versehen, so dass sie einen zu vernachlässigenden Durchhang bzw. ein zu vernachlässigendes Ausknicken aufweisen. Gleichzeitig sind diese filmelastischen Elemente jedoch in der Lage, in einem relativ breiten Spektrum reversibel verformbar zu sein. Diese filmelastischen Elemente können beispielsweise streifenförmig sein. Eine geeignete Gestalt sind beispielsweise Streifen, welche eine Durchbiegung aufweisen bzw. bogenförmig sind und aufgrund dieser Durchbiegung reversibel verformbar sind. Je nach der Stromtragfähigkeit, welche von der flexiblen elektrischen Leiterverbindung erwartet wird, ist eines oder mehrere der filmelastischen Elemente einzusetzen. Im Regelfall sollte die Stromtragfähigkeit der Stromfähigkeit der elektrischen Leiter entsprechen. Um die reversible Verformbarkeit der filmelastischen Elemente zu erhöhen, kann weiterhin vorgesehen sein, dass die filmelastischen Elemente mehrschichtig aufgebaut sind. Der Einsatz von filmelastischen Elementen an isoliert gelagerten elektrischen Leitern, die zur Übertragung von elektrischer Energie dienen, ist besonders vorteilhaft, da diese Leiter aufgrund des Stromwärmeeffektes sich in ihrer Länge verändern. Mittels der filmelastischen Elemente ist diese Längenänderung kompensierbar.

Die Verwendung eines Führungselementes verhindert ein Zerstören des reversibel verformbaren Abschnittes der flexiblen elektrischen Leiterverbindung. Dabei kann das Führungselement so gestaltet sein, dass es beispielsweise laterale Kräfte von der flexiblen elektrischen Leiterverbindung fernhält und ausschließlich eine axiale Übertragung von Kräften auf die flexible elektrische Leiterverbindung zulässt. Weiterhin kann auch vorgesehen sein, dass ein Führungselement Bewegungen sowohl in axialer als auch in lateraler Richtung zulässt, wobei jeweils der Freiheitsgrad der Bewegungen eingeschränkt ist.

Eine vorteilhafte Ausgestaltung der Erfindung kann weiterhin vorgesehen, dass das wenigstens eine filmelastische Element ein gefalteten Abschnitt aufweist.

Durch einen gefalteten Abschnitt oder eine Vielzahl von gefalteten Abschnitten kann die Elastizität der filmelastischen Elemente weiter vergrößert werden. Dabei kann auf einem sehr geringen Bauraum eine elektrische Leiterverbindung mit einer großen Flexibilität eingesetzt werden. Die gefalteten Abschnitte können dabei beispielsweise meanderförmig, spiralförmig, wellig, nach Art einer Schraubenfeder oder Spiralfeder verformte Streifen oder auch eine Scheibe mit konzentrischen Falten sein.

Eine weitere vorteilhafte Ausgestaltung der Erfindung kann vorsehen, dass das filmelastische Element ein Faltenbalg ist.

Ein Faltenbalg bietet den Vorteil, bei einer hinreichend großen Flexibilität einen großen Leiterquerschnitt zur Verfügung stellen zu können. Der zur Verfügung stehende Querschnitt zur Führung des elektrischen Stromes ist möglichst groß zu wählen, um die Verluste an der elektrischen Leiterverbindung möglichst klein zu halten. Ein Faltenbalg kann Bewegungen in vielen Richtungen, auch Kombination von Bewegungen in mehreren Richtungen, kompensieren.

Weiterhin kann vorteilhaft vorgesehen sein, dass der Faltenbalg ein rotationssymmetrischen Faltenbalg mit um die Symmetrieachse umlaufenden Falten ist.

Die Verwendung eines rotationssymmetrisch umlaufenden Faltenbalges gestattet es, eine dielektrische günstige Kontur für die flexible elektrische Leiterverbindung zu schaffen. Die Isolationsfestigkeit gegebenenfalls beeinflussende Spitzen, Kanten oder Vorsprünge sind durch den rotationssymmetrischen Aufbau vermieden. Die um die Symmetrieachse umlaufenden Falten gestatten es, dass der Faltenbalg innerhalb eines weiten Bereiches häufig verformbar ist, ohne dabei das Material in seiner Struktur ermüden zu lassen.

Weiterhin kann es vorteilhaft vorgesehen sein, dass der erste und der zweite elektrische Leiter einander zugewandte Enden aufweisen, und der Faltenbalg stirnseitig an den elektrischen Leitern angeordnet ist.

Die stirnseitige Verbindung zweier elektrischer Leiter gestattet es zum einen das Problem der elektrischen Verbindung der elektrischen Leiter zu lösen. Zum anderen wird beispielsweise eine thermisch bedingte Längenänderung der Leiter durch den Faltenbalg kompensiert. Dadurch wird die elektrische Verbindungsstelle von mechanischen Spannungen freigehalten. Dies gewährleistet eine dauerhafte und zuverlässige Kontaktierung der beiden elektrischen Leiter. Weiterhin ist bei einer Ausgestaltung der elektrischen Leiter als Rohrleiter durch den Faltenbalg die rohrförmige Struktur fortführbar.

Weiterhin kann vorteilhaft vorgesehen sein, dass das Führungselement die flexible Leiterverbindung überbrückt.

Bei einer brückenartigen Ausgestaltung des Führungselementes, welches die flexible Leiterverbindung überbrückt, kann zum einen die Führung der Leiterverbindung durch das Führungselement gewährleistet werden. Zum anderen bietet das Führungselement einen mechanischen Schutz vor äußeren Belastungen. Als solches kann dabei beispielsweise vorgesehen sein, dass sich das Führungselement käfigartig um die flexible Leiterverbindung herum erstreckt. Besonders günstig ist ein radiales Umgreifen der flexiblen Leiterverbindung in Form einer Hülse.

Eine weitere Aufgabe der vorliegenden Erfindung ist es, eine Verwendung für einen Faltenbalg in einer elektrischen Leiterverbindung anzugeben. Dabei kann es vorgesehen sein, dass der Faltenbalg mit zwei Leitern stirnseitig verbunden ist.

Im Folgenden wird die Erfindung anhand eines Ausführungsbeispiels in einer Zeichnung schematisch gezeigt und nachfolgend näher beschrieben.

Dabei zeigt die
- Figur 1: eine erste Variante einer flexiblen elektrischen Leiterverbindung im montierten Zustand, die
- Figur 2: eine zweite Variante einer flexiblen elektrischen Leiterverbindung im montierten Zustand, die
- Figur 3: eine dritte Variante einer flexiblen elektrischen Leiterverbindung im montierten Zustand und die
- Figur 4: eine vierte Variante einer flexiblen elektrischen Leiterverbindung im montierten Zustand.

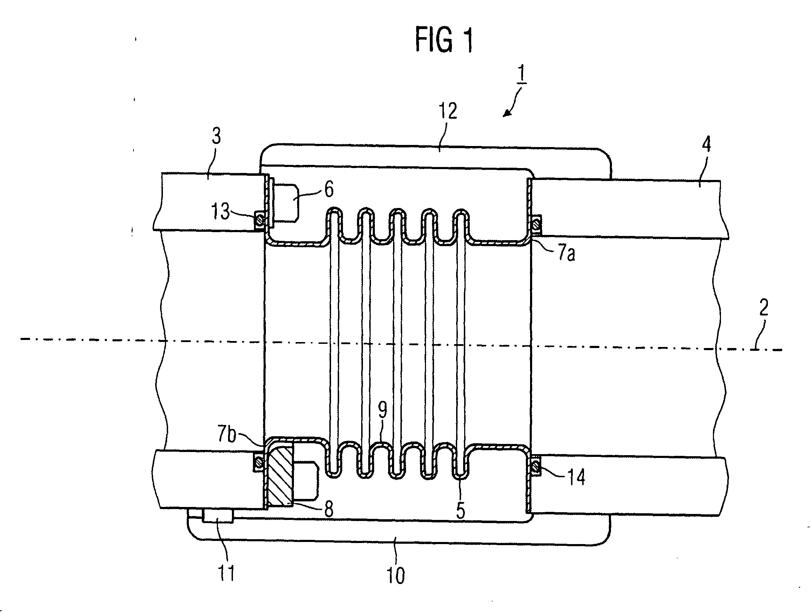

Die Figur 1 zeigt zwei Ausgestaltungsbeispiele einer ersten Variante einer flexiblen elektrischen Leiterverbindung 1. Oberhalb einer Symmetrieachse 2 ist eine Ausführungsform einer flexiblen elektrischen Leiterverbindung 1 angegeben, welche sowohl axiale als auch laterale Bewegungen gestattet. Unterhalb der Symmetrieachse 2 ist ein Ausführungsbeispiel angegeben, welches eine axiale Bewegbarkeit der flexiblen elektrischen Leiterverbindung 1 ermöglicht.

Die Figur zeigt einen ersten elektrischen Leiter 3 sowie einen zweiten elektrischen Leiter 4. Der erste und der zweite elektrische Leiter 3, 4 sind jeweils rohrförmig ausgebildet. Der erste und zweite elektrische Leiter 3, 4 sind isoliert gelagert und dienen der Übertragung von elektrischen Betriebsströmen in einer Elektroenergieübertragungsanlage. Eine Elektroenergieübertragungsanlage kann beispielsweise ein druckgasisolierter elektrischer Leiter oder ein freiluftisolierter Sammelschienenabschnitt sein. Der erste und der zweite elektrische Leiter 3, 4 sind koaxial zu der Symmetrieachse 2 angeordnet. Die Enden des ersten elektrischen Leiters 3 und des zweiten elektrischen Leiters 4 sind einander zugewandt. Zur elektrischen Kontaktierung des ersten elektrischen Leiters 3 mit dem zweiten elektrischen Leiter 4 ist stirnseitig an den Leitern 3, 4 ein Faltenbalg 5 befestigt. Die Befestigung kann zum einen mittels einer Vielzahl von Bolzen 6 erfolgen, welche durch im Bereich von endseitigen, nach außen ragenden Kröpfungen 7a,b des Faltenbalges 5 angeordnete Öffnungen hindurchragen. Alternativ kann vorgesehen sein, dass ein umlaufenden Druckring 8 mit einer geringen Anzahl von Bolzen 6 die Kröpfungen 7a,b gegen die stirnflächigen Enden des ersten und des zweiten elektrischen Leiters 3, 4 presst. In der ersten Variante sind in die Fügestellen von zwischen dem Faltenbalg 5 und den Leitern 3, 4 zur Abdichtung O-Ringe 13, 14 eingelegt. Somit ist es möglich, durch die Leiter 3, 4 ein Kühlmedium strömen zu lassen, welche auch durch die flexible elektrische Leiterverbindung 1 strömt. Der Faltenbalg 5 wirkt im in der Figur 1 dargestellten Beispiel als filmelastisches Element. Dazu weist er eine Vielzahl von um die Symmetrieachse 2 umlaufenden Falten 9 auf. Durch den gefalteten Abschnitt des Faltenbalges 5 ist der Faltenbalg 5 reversibel verformbar. Die flexible elektrische Leiterverbindung 1 wird von einem Führungselement 10 überbrückt. Das Führungselement 10 ist an dem zweiten elektrischen Leiter 4 ortsfest gelagert und überbrückt die flexible elektrische Leiterverbindung 1. An dem ersten elektrischen Leiter 3 ist das Führungselement 10 mittels eines Gleitelementes 11 gleitend abgestützt. Das Führungselement 10 ist in Form einer hohlzylindrischen Hülse ausgebildet. Oberhalb der Symmetrieachse 2 ist eine weitere Form eines Führungselementes 12 dargestellt. Die weitere Form des Führungselementes 12 ist an dem zweiten elektrischen Leiter 4 ortsfest gelagert und ist hohlzylindrisch ausgestaltet. Der Innenradius des Führungselementes 12 ist dabei etwas größer als der Durchmesser des ersten elektrischen Leiters 3. Die zweite Form des Führungselementes 12 ist ausschließlich an dem zweiten elektrischen Leiter 4 gelagert. Dadurch ist es ermöglicht, dass sowohl Längenänderungen des ersten elektrischen Leiters 3 und des zweiten elektrischen Leiters 4 in axialer Richtung kompensiert werden können als auch ein Verkippen oder Versetzen der beiden elektrischen Leiter 3, 4 zueinander ausgeglichen werden kann. Durch die Wahl des Innendurchmessers der weiteren Ausführungsform des Führungselementes 12 kann der Grad des zulässigen Verkippens der elektrischen Leiter 3, 4 zueinander festgelegt werden.

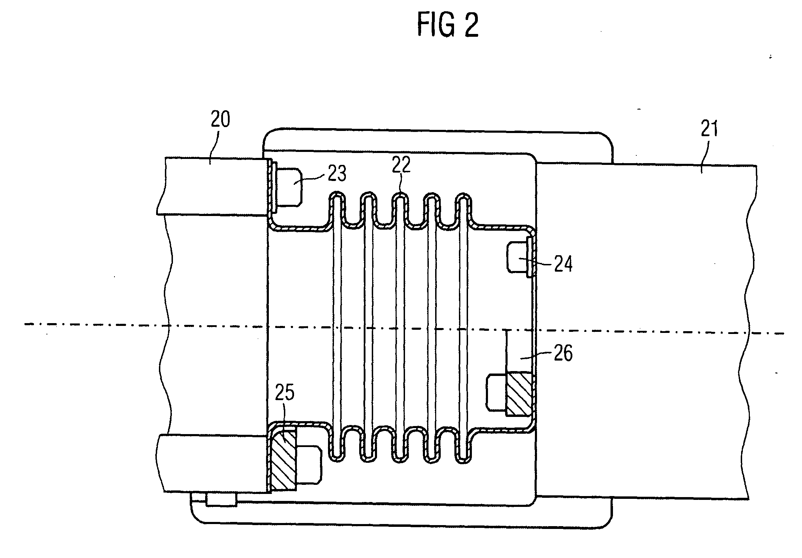

Die Figuren 2, 3 und 4 zeigen weitere Varianten von flexiblen elektrischen Leiterverbindungen, wobei die dort als filmelastische Elemente wirkenden Faltenbälge in verschiedenen Varianten mit den elektrischen Leitern kontaktiert sind. Der prinzipielle Aufbau entspricht der voranstehenden Beschreibung der Figur 1.

Die Figur 2 zeigt einen elektrischen Leiter 20 sowie einen zweiten elektrischen Leiter 21. Der erste elektrische Leiter 20 ist rohrförmig ausgebildet. Der zweite elektrische Leiter 21 ist zylindrisch ausgestaltet. Ein Faltenbalg 22 verbindet den ersten elektrischen Leiter 20 mit dem zweiten elektrischen Leiter 21. Der Faltenbalg 22 weist an seinem dem ersten elektrischen Leiter 20 zugewandten Ende nach außen gewandte Kröpfungen auf. An seinem dem zweiten elektrischen Leiter 21 zugewandten Ende weist der Faltenbalg 22 nach innen gewandte Kröpfungen auf. Im Bereich der Kröpfungen wird der Faltenbalg 22 mittels Bolzen 23, 24 unmittelbar mit den elektrischen Leiter 20, 21 verschraubt. Alternativ kann vorgesehen sein, dass ein umlaufender Druckring auf den Kröpfungen aufliegt und mittels Bolzen der Druckring 25, 26 die Kröpfungen des Faltenbalges 22 gegen stirnseitige Flächen des ersten elektrischen Leiters 20 bzw. des zweiten elektrischen Leiters 21 presst.

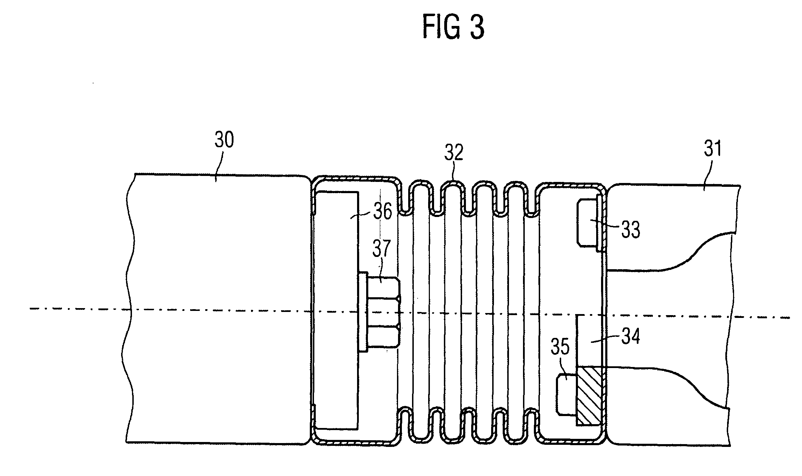

Die Figur 3 zeigt eine dritte Variante einer flexiblen elektrischen Leiterverbindung. Wiederum ist ein erster elektrischer Leiter 30 mit einem zweiten elektrischen Leiter 31 verbunden. Zur elektrischen Kontaktierung des ersten elektrischen Leiters 30 mit dem zweiten elektrischen Leiter 31 ist ein Faltenbalg 32 vorgesehen. Der erste elektrische Leiter 30 ist als massiver Zylinder ausgestaltet. Der zweite elektrische Leiter 31 ist hohlzylindrisch gestaltet, wobei er endseitig einen verringerten Innendurchmesser aufweist, so dass der Faltenbalg 32 stirnseitig mittels Bolzen 33 oder alternativ mittels eines Andruckringes 34 und Bolzen 35 anflanschbar ist. An dem dem ersten elektrischen Leiter 30 zugewandten Ende des Faltenbalges 32 ist eine zylindrische Anpressplatte 36 angeordnet, welche mit einem zentralen Bolzen 37 die nach innen gerichtete Umbördelungen des Faltenbalges 32 gegen den ersten elektrischen Leiter 30 presst. Die Außenkontur des Faltenbalges 32 ist dabei derart gewählt, dass sie etwa dem Durchmesser des elektrischen Leiters 30 und des zweiten elektrischen Leiters 31 entspricht. An seinen Enden weist der Faltenbalg 32 nach innen gerichtete Umbördelungen auf, so dass alle zum Verbinden des Faltenbalges 32 mit den Leitern 30, 31 vorgesehenen Befestigungselemente im Innern des Faltenbalges 32 liegen. Dadurch entsteht eine dielektrisch günstige Außenkontur.

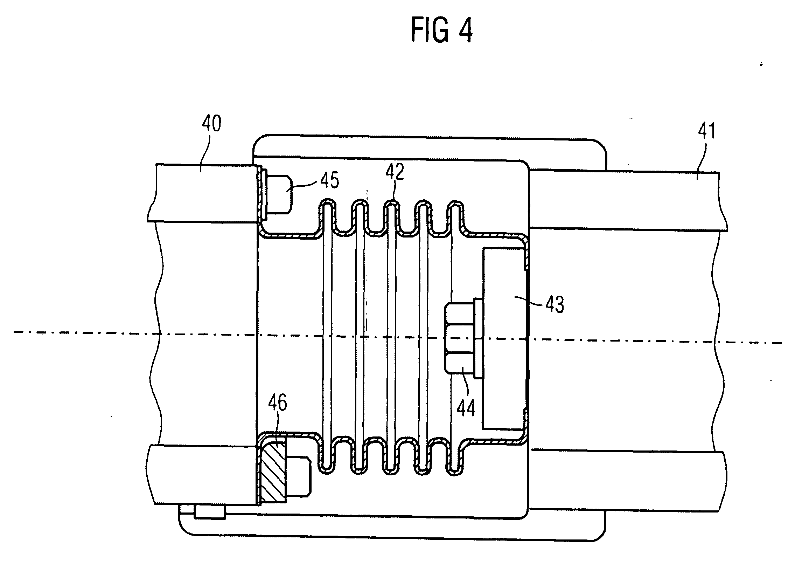

Die in der Figur 4 gezeigte vierte Variante einer flexiblen elektrischen Leiterverbindung weist einen ersten elektrischen Leiter 40 sowie einen zweiten elektrischen Leiter 41 auf. Der erste elektrische Leiter 40 ist hohlzylindrisch ausgestaltet. Der zweite elektrische Leiter 41 ist vollzylindrisch ausgestaltet. Ein Faltenbalg 42 weist an seinem dem ersten elektrischen Leiter 40 zugewandten Ende eine nach außen gerichtete Umbördelung auf. An seinem dem zweiten elektrischen Leiter 41 zugewandten Ende weist der Faltenbalg 42 eine nach innen gewandte Umbördelung auf. Zur Verbindung des zweiten elektrischen Leiters 41 mit dem Faltenbalg 42 ist eine aus der Figur 3 bekannte Anpressplatte 43 vorgesehen, welche mittels eines zentral angeordneten Anpressbolzens 44 unter Zwischenlage der nach innen ragenden Umbördelung des Faltenbalges 42 gegen den zweiten elektrischen Leiter 41 gepresst ist. Dadurch ist eine elektrische sowie mechanische Verbindung des Faltenbalges 42 mit dem zweiten elektrischen Leiter 41 gewährleistet. Die elektrische sowie mechanische Verbindung des dem ersten elektrischen Leiter 40 zugewandten Endes des Faltenbalges 42 erfolgt - wie nach der Figur 2 bekannt - mittels durch die Umbördelung hindurchragender Anpressbolzen 45 oder alternativ mittels einer umlaufenden Druckscheibe 46, die mittels Bolzen unter Zwischenlage der Umbördelung des Faltenbalges 42 diesen mit dem ersten elektrischen Leiter 40 elektrisch sowie mechanisch verbindet.

Sämtliche in den Figuren 1, 2, 3 und 4 dargestellten Details sind untereinander kombinierbar, so dass Weiterbildungen aus den Figuren 2, 3 und 4, die nicht in den Figuren gezeigt sind, entstehen können.

## Patentansprüche

1. Flexible elektrische Leiterverbindung (1) zwischen einem ersten elektrischen Leiter (3) und einem zweiten elektrischen Leiter (4), wobei die Leiterverbindung (1) einen reversibel verformbaren Abschnitt mit einem filmelastischen Element (5) und einem eine Bewegbarkeit des reversibel verformbaren Abschnittes begrenzendes Führungselement (10, 12) aufweist,
**dadurch gekennzeichnet, dass**
das Führungselement (10, 12) den reversibel verformbaren Abschnitt umgibt.

2. Flexible Leiterverbindung (1) nach Anspruch 1,
**dadurch gekennzeichnet, dass**
das wenigstens eine filmelastische Element (5) ein gefalteten Abschnitt aufweist.

3. Flexible Leiterverbindung (1) nach Anspruch 1 oder 2,
**dadurch gekennzeichnet, dass**
das filmelastische Element ein Faltenbalg (5) ist.

4. Flexible Leiterverbindung (1) nach Anspruch 3,
**dadurch gekennzeichnet, dass**
der Faltenbalg (5) ein rotationssymmetrischer Faltenbalg mit um die Symmetrieachse (2) umlaufenden Falten ist.

5. Flexible Leiterverbindung (1) nach Anspruch 3 oder 4,
**dadurch gekennzeichnet, dass**
der erste und der zweite elektrische Leiter (3,4) einander zugewandte Enden aufweisen, und der Faltenbalg (5) stirnseitig an den elektrischen Leitern (3,4) angeordnet ist.

6. Flexible Leiterverbindung (1) nach Anspruch 1,
**dadurch gekennzeichnet, dass**
das Führungselement (10,12) die flexible Leiterverbindung (1) überbrückt.

## Claims

1. Flexible electrical conductor connection (1) between a first electrical conductor (3) and a second electrical conductor (4), the conductor connection (1) having a reversibly deformable section having a film-elastic element (5) and a guide element (10, 12), which limits the ability of the reversibly deformable section to move, **characterized in that** the guide element (10, 12) surrounds the reversibly deformable section.

2. Flexible conductor connection (1) according to Claim 1, **characterized in that** the at least one film-elastic element (5) has a folded section.

3. Flexible conductor connection (1) according to Claim 1 or 2, **characterized in that** the film-elastic element is a bellows (5).

4. Flexible conductor connection (1) according to Claim 3, **characterized in that** the bellows (5) is a rotationally symmetrical bellows having folds surrounding the axis of symmetry (2).

5. Flexible conductor connection (1) according to Claim 3 or 4, **characterized in that** the first and the second electrical conductors (3, 4) have mutually facing ends, and the bellows (5) is arranged at one end on the electrical conductors (3, 4).

6. Flexible conductor connection (1) according to Claim 1, **characterized in that** the guide element (10, 12) bridges the flexible conductor connection (1).

## Revendications

1. Connexion (1) électrique flexible pour des conducteurs entre un premier conducteur (3) électrique et un deuxième conducteur (4) électrique, la connexion (1) pour des conducteurs ayant un tronçon déformable de manière réversible, un élément (5) ayant l'élasticité d'un film et un élément (10, 12) de guidage délimitant une mobilité du tronçon déformable de façon réversible,
**caractérisée en ce que** l'élément (10, 12) de guidage entoure le tronçon déformable de façon réversible.

2. Connexion (1) flexible pour conducteurs suivant la revendication 1,
**caractérisée en ce que** le au moins un élément (5) ayant l'élasticité d'un film a un tronçon plissé.

3. Connexion (1) flexible pour conducteurs suivant la revendication 1 ou 2,
**caractérisée en ce que** l'élément ayant l'élasticité d'un film est un soufflet (5).

4. Connexion (1) flexible pour conducteurs suivant la revendication 3,
**caractérisée en ce que** le soufflet (5) est un soufflet de révolution ayant des plis s'étendant autour de l'axe (2) de symétrie.

5. Connexion (1) flexible pour conducteurs suivant la revendication 3 ou 4,
**caractérisée en ce que** le premier et le deuxième conducteurs (3, 4) électriques ont des extrémités tournées l'une vers l'autre et le soufflet (5) est disposé du côté frontal sur les conducteurs (3, 4) électriques.

6. Connexion (1) flexible pour conducteurs suivant la revendication 1,
**caractérisée en ce que** l'élément (10, 12) de guidage enjambe la connexion flexible pour conducteurs.
